# EUROPÄISCHE PATENTSCHRIFT

(11) **EP 3 189 629 B1**
(45) Veröffentlichungstag und Bekanntmachung des Hinweises auf die Patenterteilung: **20.02.2019**
(21) Anmeldenummer: 15750016.6
(22) Anmeldetag: 04.08.2015
(51) Int. Cl.: H04L 12/413, H04L 12/40, H04L 1/00

(54) **VERFAHREN ZUR SERIELLEN ÜBERTRAGUNG EINES RAHMENS ÜBER EIN BUSSYSTEM VON EINEM SENDER ZU MINDESTENS EINEM EMPFÄNGER UND TEILNEHMERSTATION FÜR EIN BUSSYSTEM**
METHOD FOR SERIALLY TRANSMITTING A FRAME FROM A TRANSMITTER TO AT LEAST ONE RECEIVER BY MEANS OF A BUS SYSTEM, AND A SUBSCRIBER STATION FOR A BUS SYSTEM
PROCÉDÉ DE TRANSMISSION SÉRIE D'UNE TRAME PAR UN SYSTÈME DE BUS D'UN ÉMETTEUR À AU MOINS UN RÉCEPTEUR ET STATION ABONNÉE POUR UN SYSTÈME DE BUS

(30) Priorität: 02.09.2014 DE 102014217508; 20.05.2015 DE 102015209207
(43) Veröffentlichungstag der Anmeldung: 12.07.2017
(73) Patentinhaber: Robert Bosch GmbH, 70442 Stuttgart (DE)
(72) Erfinder: HEINEBRODT, Martin, 70499 Stuttgart (DE); HORST, Christian, 72144 Dusslingen (DE); SVEJKOVSKY, Peter, 71272 Renningen (DE); MUTTER, Arthur, 73765 Neuhausen (DE)
(86) Internationale Anmeldenummer: PCT/EP2015/067928
(87) Internationale Veröffentlichungsnummer: WO 2016/034349

(56) Entgegenhaltungen:
- US-A1- 2014 201 410
- US-A1- 2014 223 258

## Beschreibung

### Stand der Technik

Es wurde eine Schwäche bei der CRC-Erzeugung (CRC = Cyclic Redundancy Check = zyklische Redundanzprüfung) der CAN FD Rahmen oder Nachrichten nach dem aktuellen Committee Draft der ISO11898-1 oder der Spezifikation "CAN with Flexible Data-Rate, Specification Version 1.0 (released April 17th, 2012)" festgestellt, welche auf der Internetseite http://www.semiconductors.bosch.com/ heruntergeladen werden kann.

Die Schwäche steht im Zusammenhang mit dem CAN-Stuff-Mechanismus, welcher in dem angeführten Dokument beschrieben wird. Hierbei wird nach fünf Bits mit dem gleichen Pegel ein "Stuft-Bit" oder "stuff bit" eingefügt, das einen anderen Pegel als die fünf vorangehenden Bits hat. Durch diese vorbestimmte Regel zum Einfügen der Stuff-Bits kann verhindert werden, dass Bitfolgen mit mehr als fünf gleichen Bits irrtümlich als beispielsweise eine Signalisierung eines Rahmenendes "End of Frame" interpretiert werden, oder dass durch das Fehlen von Signalflanken bzw. Pegelwechseln zwischen den Bits die Busteilnehmer die Synchronisierung verlieren. Denn bei CAN und CAN FD werden Signalflanken bzw. Pegelwechsel zur Synchronisierung der Busteilnehmer herangezogen.

CAN FD Nachrichten oder Rahmen (frames) haben nach einem initialen Start of Frame Bit (SOF-Bit) mit dominantem Pegel, das den Beginn des Rahmens signalisiert, ein Bit 28 bis Bit 18 und gegebenenfalls noch ein Bit 17 bis Bit 0 für einen Identifizierer oder Identifier des CAN FD Rahmens. Daher werden das Bit 28 bis Bit 0 auch ID28, ID 27, usw. genannt. Frühestens nach dem Bit ID25 wird gemäß der bekannten Regel zum Einfügen der Stuff-Bits ein Stuff-Bit in den CAN FD Rahmen eingefügt, nämlich wenn ID28-ID25= "0000". Werden CAN FD Rahmen beginnend mit ID28-ID25= "0000" oder ID28-ID25 = "0001" versandt, so kann ein vom Empfänger des Rahmens fehlerhaft detektiertes Start-of-Frame Bit dazu führen, dass der Identifier des Rahmens verfälscht wird, die CRC-Prüfung diesen Fehler aber nicht erkennt. Da bei CAN FD Stuff-Bits mit in die CRC-Erzeugung einbezogen sind, führt dieser Fehler zu keinem Format-Fehler und wird nicht erkannt. Der Rahmen wird daher vom Empfänger als gültig akzeptiert. Davon betroffen sind 11-Bit und 29-Bit Identifier bei Rahmen im FD-Format (17-Bit und 21-Bit CRC).

Die CRC-Schwäche wird durch den Initialisierungsvektor des CRC-Generators verursacht. Dieser ist aktuell ein Null-Vektor "0....0". Diese Schwäche kann durch eine Änderung des Initialisierungsvektors auf z.B. "10...0" (endgültiger Wert erst nach weiteren Untersuchungen) behoben werden. Das Problem hierbei ist jedoch, dass zwei CAN FD Implementierungen, die denselben CRC-Generator aber mit unterschiedlichen Initialisierungsvektoren verwenden, nicht miteinander kommunizieren können. Sie würden ständig CRC-Fehler detektieren und die empfangenen Rahmen verwerfen.

Rahmen im Classic CAN Format sind von dem Problem nicht betroffen, da hier die Stuff-Bits von der CRC-Berechnung ausgeschlossen sind.

Die Schwäche des CAN FD CRC kommt nur in den folgenden beiden Fällen zum tragen:
Fall1) Sender sendet ID28-ID25 = "0000".
   Der Empfänger erkennt Start-of-Frame nicht und interpretiert daher ID28 als Start-of-Frame. Damit werden die ersten vier Identifier Bits aufgrund des vom Sender nach ID25 eingefügten Stuff-Bits zu ID28-ID25 = "0001" verfälscht, alle nachfolgenden Identifier Bits werden korrekt empfangen. Der Sender erkennt beim Zurücklesen des Start-of-Frame vom Bus keinen Fehler.
Fall 2) Sender sendet ID28-ID25 = "0001"

Der Empfänger sieht ein dominantes Bit in der Bitzeit vor dem gesendeten Start-of-Frame und interpretiert diese Störung als Start-of-Frame. Das vom Sender gesendete Start-of-Frame erkennt der Empfänger als ID28. Damit werden die ersten vier Identifier Bits zu ID28-ID25 = "0000" verfälscht. Das gesendete ID25 = "1" wird vom Empfänger als Stuff-Bit interpretiert. Alle nachfolgenden Identifier Bits werden korrekt empfangen. Der Sender detektiert kein dominantes Bit in der Bitzeit direkt vor seinem Start-of-Frame.
Zusammengefasst zeigt Tabelle 1, wie durch den dargestellten Effekt die führenden vier Identifier-Bits auf dem Weg zum Empfänger verfälscht werden können, ohne dass der Fehler von der CRC-Prüfung des Empfängers erkannt wird.

**Tabelle 1**

| Gesendet | | | | | Empfangen | | | |
|---|---|---|---|---|---|---|---|---|
| ID25 | ID27 | ID26 | ID25 | | ID25 | ID27 | ID26 | ID25 |
| 0 | 0 | 0 | 0 | → | 0 | 0 | 0 | 1 |
| 0 | 0 | 0 | 1 | → | 0 | 0 | 0 | 0 |

In allen anderen Fällen wird ein verfälschter Identifier vom CRC mit einer Hamming-Distanz von 6 erkannt.

Dokument US 2014/223258 A1 zeigt das Präambel der Ansprüche 1 und 9.

### Offenbarung der Erfindung

Daher ist es Aufgabe der vorliegenden Erfindung, ein Verfahren zur seriellen Übertragung eines Rahmens über ein Bussystem von einem Sender zu mindestens einem Empfänger und eine Teilnehmerstation für ein Bussystem bereitzustellen, welches Verfahren und Teilnehmerstation die zuvor genannten Probleme lösen. Insbesondere sollen ein Verfahren zur seriellen Übertragung eines Rahmens über ein Bussystem von einem Sender zu mindestens einem Empfänger und eine Teilnehmerstation für ein Bussystem bereitgestellt werden, bei welchen die Sicherheit der Datenübertragung gegenüber bisherigen Verfahren weiter erhöht wird.

Die Aufgabe wird durch ein Verfahren zur seriellen Übertragung eines Rahmens über eine Busleitung von einem Sender zu mindestens einem Empfänger mit den Merkmalen des Anspruchs 1 gelöst. Bei dem Verfahren werden vom Sender in den Rahmen gemäß einer vorbestimmten Regel Stuff-Bits zur Erzeugung zusätzlicher Signalflanken eingefügt und/oder vom Empfänger die Stuff-Bits bei einer Auswertung des Rahmens wieder entfernt, wobei wenigstens eine Information über einen Teilabschnitt des Rahmens zusätzlich außerhalb dieses Teilabschnitts eingefügt und übertragen wird, und wobei der Teilabschnitt eine vorbestimmte Abfolge von Bitwerten aufweist.

Vorteilhafte weitere Ausgestaltungen des Verfahrens sind in den abhängigen Patentansprüchen angegeben.

Es ist möglich, dass der Rahmen einen Kopfteil, einen Datenteil und einen Schlussteil aufweist und/oder dass der Kopfteil einen Identifier aufweist und/oder dass der Rahmen eine CRC-Checksumme aufweist und/oder dass der Teilabschnitt kein Stuff-Bit aufweist.

Bevorzugt kann die Information im Datenteil und/oder im Kopfteil des Rahmens übertragen werden. Dadurch sind keine Änderungen an einer Kontrolleinrichtung einer Teilnehmerstation des Bussystems erforderlich.

Die Information kann zumindest teilweise im RRS-Bit und/oder im res-Bit und/oder im "ESI"-Bit eines CAN FD Rahmens und/oder einer zusätzlichen Prüfsumme im Datenteil übertragen werden.

Vorzugsweise kann der Empfänger bei der Auswertung des Rahmens die außerhalb des Teilabschnitts abgelegte Information über den Teilabschnitt des Rahmens mit dem Teilabschnitt des Rahmens vergleichen und abhängig von dem Vergleichsergebnis den Rahmen für gültig oder ungültig bewerten.

Möglicherweise kann der Teilabschnitt mit demjenigen Bit enden, nach welchem vom Sender frühestens ein Stuff-Bit in den Rahmen eingefügt wird, und/oder kann der Teilabschnitt des Rahmens vier Bits umfassen, deren Informationen in zwei Bits außerhalb dieses Teilabschnitts übertragen werden können.

In einer speziellen Ausgestaltung kann der Teilabschnitt des Rahmens bis zu drei Bits umfassen, deren Information in einem Bit außerhalb dieses Teilabschnitts übertragen werden, und/oder der Teilabschnitt des Rahmens kann bis zu drei Bits mit gleichem Pegel umfassen, denen außerhalb des Teilabschnitts ein weiteres Bit mit gleichem Pegel unmittelbar vorangehen kann.

In einer speziellen Ausgestaltung entspricht der Teilabschnitt des Rahmens den vier ersten Bits des Identifiers eines CAN FD Rahmens.

Die zuvor genannte Aufgabe wird zudem durch eine Teilnehmerstation für ein Bussystem nach Patentanspruch 9 gelöst. Die Teilnehmerstation umfasst eine Sende-/Empfangseinrichtung zum Senden eines Rahmens an und/oder Empfangen eines Rahmens von eine/r weitere/n Teilnehmerstation des Bussystems ausgestaltet sein, mit welchem Rahmen mittels serieller Übertragung über eine Busleitung von einem Sender zu mindestens einem Empfänger übertragbar sind, und eine Absicherungseinrichtung zum Absichern einer Information über einen Teilabschnitt des Rahmens, wobei die Sende-/Empfangseinrichtung ausgestaltet ist, vor dem Senden eines Rahmens in den Rahmen gemäß einer vorbestimmten Regel Stuff-Bits zur Erzeugung zusätzlicher Signalflanken einzufügen und/oder beim Auswerten eines empfangenen Rahmens die Stuff-Bits wieder zu entfernen, wobei die Absicherungseinrichtung ausgestaltet ist, wenigstens eine Information über einen Teilabschnitt des Rahmens zusätzlich außerhalb dieses Teilabschnittes in den Rahmen einzufügen, und wobei der Teilabschnitt eine vorbestimmte Abfolge von Bitwerten aufweist.

Die Teilnehmerstation kann Teil eines Bussystems sein, das zudem eine Busleitung und mindestens zwei Teilnehmerstationen aufweist, welche über die Busleitung derart miteinander verbindbar sind, dass sie miteinander kommunizieren können, wobei mindestens eine der mindestens zwei Teilnehmerstationen die zuvor beschriebene Teilnehmerstation ist.

Weitere mögliche Implementierungen der Erfindung umfassen auch nicht explizit genannte Kombinationen von zuvor oder im Folgenden bezüglich der

Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 eine Darstellung eines Aufbaus eines Rahmens bei dem Bussystem gemäß dem ersten Ausführungsbeispiel; und
Fig. 3 bis Fig. 6 zeigen jeweils in Bezug auf ein zweites Ausführungsbeispiel das Format von CAN FD Rahmen mit der Platzierung der zu prüfenden ersten vier Identifier Bits (ID28-ID25) und des Prüfungsbits RRS.

In den Figuren sind gleiche oder funktionsgleiche Elemente, sofern nichts anderes angegeben ist, mit denselben Bezugszeichen versehen.

### Erstes Ausführungsbeispiel

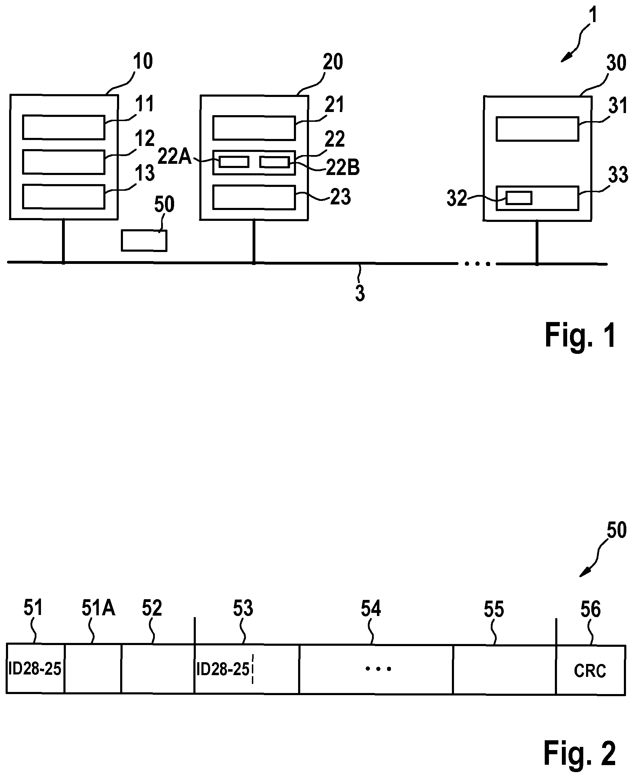

Fig. 1 zeigt in einem ersten Ausführungsbeispiel ein Bussystem 1, das beispielsweise ein CAN FD-Bussystem, sein kann. Das Bussystem 1 kann in einem Fahrzeug, insbesondere einem Kraftfahrzeug, einem Flugzeug, usw., oder im industriellen Bereich z.B. bei Steuerungsanlagen etc., oder im Krankenhaus usw. Verwendung finden.

In Fig. 1 hat das Bussystem 1 eine Busleitung 3, an die eine Vielzahl von Teilnehmerstationen 10, 20, 30 angeschlossen sind. Über die Busleitung 3 können Rahmen 50 in der Form von Signalen zwischen den einzelnen Teilnehmerstationen 10, 20, 30 übertragen werden. Die Teilnehmerstationen 10, 20, 30 können beispielsweise Steuergeräte, Sensoren, Anzeigevorrichtungen, usw. eines Kraftfahrzeugs sein.

Wie in Fig. 1 gezeigt, hat die Teilnehmerstation 10 eine Kommunikationssteuereinrichtung 11, eine Absicherungseinrichtung 12 und eine Sende-/Empfangseinrichtung 13. Selbstverständlich kann die Absicherungseinrichtung 12 auch Teil der Kommunikationssteuereinrichtung 11 sein. Die Teilnehmerstation 20 hat dagegen eine Kommunikationssteuereinrichtung 21, eine Absicherungseinrichtung 22 mit einer Einfügeeinheit 22A und einer Auswerteeinheit 22B, und eine Sende-/Empfangseinrichtung 23. Die Teilnehmerstation 30 hat eine Kommunikationssteuereinrichtung 31, eine Absicherungseinrichtung 32 und eine Sende-/Empfangseinrichtung 33, welche die Absicherungseinrichtung 32 aufweist. Die Sende-/Empfangseinrichtungen 13, 23, 33 der Teilnehmerstationen 10, 20, 30 sind jeweils direkt an die Busleitung 3 angeschlossen, auch wenn dies in Fig. 1 nicht dargestellt ist.

Die Kommunikationssteuereinrichtungen 11, 21, 31 dienen jeweils zur Steuerung einer Kommunikation der jeweiligen Teilnehmerstation 10, 20, 30 über die Busleitung 3 mit einer anderen Teilnehmerstation der an die Busleitung 3 angeschlossenen Teilnehmerstationen 10, 20, 30. Die Kommunikationssteuereinrichtungen 11, 21, 31 können jeweils wie ein herkömmlicher CAN FD Kontroller ausgeführt sein. Die Kommunikationssteuereinrichtungen 11, 21, 31 können jeweils auch als Teil eines Mikrocontrollers ausgebildet sein, welcher ebenfalls von der jeweiligen Teilnehmerstation 10, 20, 30 umfasst ist.

Die Sende-/Empfangseinrichtungen 13, 23, 33 können jeweils wie ein herkömmlicher CAN FD Transceiver ausgeführt sein.

Die Absicherungseinrichtungen 12, 22, 32 können auch als Software-Module ausgeführt sein, welche einen Teil der auf der Teilnehmerstation ablaufenden Software bilden. In diesem Fall wird das Verfahren gemäß der vorliegenden Erfindung vollständig in Software abgebildet.

Das erste Ausführungsbeispiel beschreibt ein Verfahren, zur Absicherung von CAN FD Rahmen mit Identifiern entsprechend den zuvor genannten Fällen 1) und 2). Das Verfahren wird jeweils mit den Absicherungseinrichtungen 12, 22, 32 ausgeführt.

Fig. 2 zeigt sehr schematisch den Aufbau eines CAN FD Rahmens 50 ohne das Start of Frame Bit (SOF), das unmittelbar vor dem Rahmen 50 über die Busleitung 3 übertragen wird. Der Rahmen 50 hat ein Kopfteil 51, 51A, 52, ein Datenfeld 53, 54, 55, sowie ein Schlussteil 56, welches das Rahmenende bildet. Der Kopfteil 51, 51A, 52 weist in einem ersten Teilabschnitt 51 die ersten vier Bits des Identifiers (ID) 51, 51A, in einem zweiten Teilabschnitt 51A die übrigen Bits des Identifiers 51, 51A und ein Control Feld 52 auf. Das Datenfeld 53, 54, 55 weist in einem ersten Teil 53 ein Byte 0, in einem zweiten Teil 54 weitere Bytes und in einem dritten Teil 55 ein Byte n auf.

In Fig. 2 ist eine von vielen möglichen Platzierungen des ersten Teilabschnitts 51, welcher die zu prüfenden ersten vier Identifier Bits (ID28-ID25) aufweist, in dem Datenfeld 53, 54, 55 gezeigt. Genauer gesagt, in Fig. 2 sind die zu prüfenden ersten vier Identifier Bits (ID28-ID25) in dem ersten Teil 53 des Datenteils 53, 54, 55, also dem Byte 0 angeordnet. Der Schlussteil 56 bzw. das Rahmenende des CAN FD Rahmens 50 enthält die CRC.

Bei dem Verfahren gemäß dem vorliegenden Ausführungsbeispiel erfolgt die Absicherung ganz allgemein durch Einfügen der ersten vier Bits des Identifiers in das Datenfeld 53, 54, 55 des CAN FD Rahmens. Dieses Verfahren erfordert keine Änderungen an bestehenden CAN FD Kontrollern, wie den Kommunikationssteuereinrichtungen 11, 21, 31.

Damit ein Empfänger, beispielsweise die Teilnehmerstation 10, erkennen kann ob der Identifier 51, 51A eines empfangenen CAN FD Rahmens 50 durch ein fehlerhaft abgetastetes Start-of-Frame Bit verfälscht wurde, wird vom Sender, beispielsweise der Teilnehmerstation 30, genauer gesagt deren Absicherungseinrichtung 32, eine Kopie der von diesem Effekt betroffenen ersten vier Bits des Identifiers ID28-ID25 (Teilabschnitt 51) im Datenfeld 53, 54, 55 des CAN FD Rahmens abgelegt. Der Empfänger, also bei dem genannten Beispiel die Teilnehmerstation 10, vergleicht dann mit Hilfe seiner Absicherungseinrichtung 12, 22, 32 die vier Identifier Bits aus dem Datenfeld 53, 54, 55 mit den von ihm empfangenen Identifier Bits ID28-ID25 51. Bei Ungleichheit wird der Rahmen 50 verworfen.

Ist die Teilnehmerstation 20 Sender, wird die Kopie der von diesem Effekt betroffenen ersten vier Bits des Identifiers ID28-ID25 (Teilabschnitt 51) durch die Einfügeeinheit 22A der Absicherungseinrichtung 22 im Datenfeld 53, 54, 55 des CAN FD Rahmens 50 abgelegt, beispielsweise im Byte 0, wie in Fig. 2 gezeigt. Ist die Teilnehmerstation 20 Empfänger, vergleicht die Auswerteeinheit 22B der Absicherungseinrichtung 22 die vier Identifier Bits aus dem Datenfeld 53, 54, 55 mit den von der Teilnehmerstation 20 empfangenen Identifier Bits ID28-ID25 51.

Aufgrund der Schwäche der CAN FD CRC-Prüfung sind nur zwei Fälle relevant, wie in der zuvor angegebenen Tabelle 1 dargestellt. In allen anderen Fällen wird der verfälschte Identifier 51, 51A vom CRC sicher erkannt.

Die in Tabelle 1 und Fig. 2 gezeigten vier Identifier Bits ID28 bis ID25, der Teilabschnitt 51, können also in den oberen vier Bits des ersten Datenbytes im Datenfeld 53, 54, 55 des CAN FD Rahmens 50 abgelegt werden, wie in Fig. 2 gezeigt. Sie können aber auch in jeder beliebigen Stelle im Datenfeld 53, 54, 55 abgelegt werden.

Das beschriebene Verfahren kann für jeden Identifier 51, 51A ausgeführt werden. Alternativ ist es jedoch auch möglich, dass die Absicherungseinrichtung 22 die beschriebene Absicherung nur durchführt, wenn der Identifier 51, 51A mit den beiden kritischen Kombinationen "0000" bzw. "0001" beginnt, also einer vorbestimmten Abfolge von Bitwerten für einen Teilabschnitt 51 des CAN FD Rahmens 50.

Durch die im Datenfeld 53, 54, 55 des CAN FD Rahmens 50 abgelegten ersten vier Identifier-Bits (ID28-ID25) als Teilabschnitt 51 kann ein durch ein verfälschtes Start-of-Frame Bit veränderter Identifier 51, 51A sicher erkannt werden. Damit kann die durch die CRC-Schwäche entstandene Lücke geschlossen werden. Ganz allgemein kann der Teilabschnitt 51, der im Datenfeld 53, 54, 55 des CAN FD Rahmens 50 abgelegt wird, mit demjenigen Bit enden, nach welchem vom Sender frühestens ein Stuff-Bit in den Rahmen 5060; 70; 600; 700) eingefügt wird.

Das Verfahren hat den Vorteil, dass keine Hardware-Änderung bei den CAN FD Kontrolllern 11, 21, 31 notwendig ist. Das heißt, der Initialisierungsvektor für den CRC-Generator muss nicht verändert werden. Damit werden zwei inkompatible Hardware-Versionen vermieden.

Gemäß einer Modifikation des ersten Ausführungsbeispiels wäre alternativ auch eine Kodierung im Datenfeld 53, 54, 55 mit zwei Bits F1 und F2 für den Teilabschnitt 51 möglich. Bit F1 wird zu Null gesetzt, wenn die Identifier Bits ID28-ID26 Null sind, ansonsten hat das Bit F1 den Wert Eins. Bit F2 zeigt den Wert von ID25 an. Dies ist in der nachfolgenden Tabelle 2 in der Übersicht gezeigt.

**Tabelle 2**

| Identifier | | | | Kodierung Datenfeld | |
|---|---|---|---|---|---|
| ID25 | ID27 | ID26 | ID25 | F1 | F2 |
| 0 | 0 | 0 | 0 | 0 | 0 |
| 0 | 0 | 0 | 1 | 0 | 1 |
| andere IDs | | | 0/1 | 1 | 0/1 |

Auf diese Weise kann eine Absicherung der Identifier Bits ID28-ID25 mit weniger Speicherbedarf im Datenfeld 53 bis 55 als bei dem ersten Ausführungsbeispiel erzielt werden.

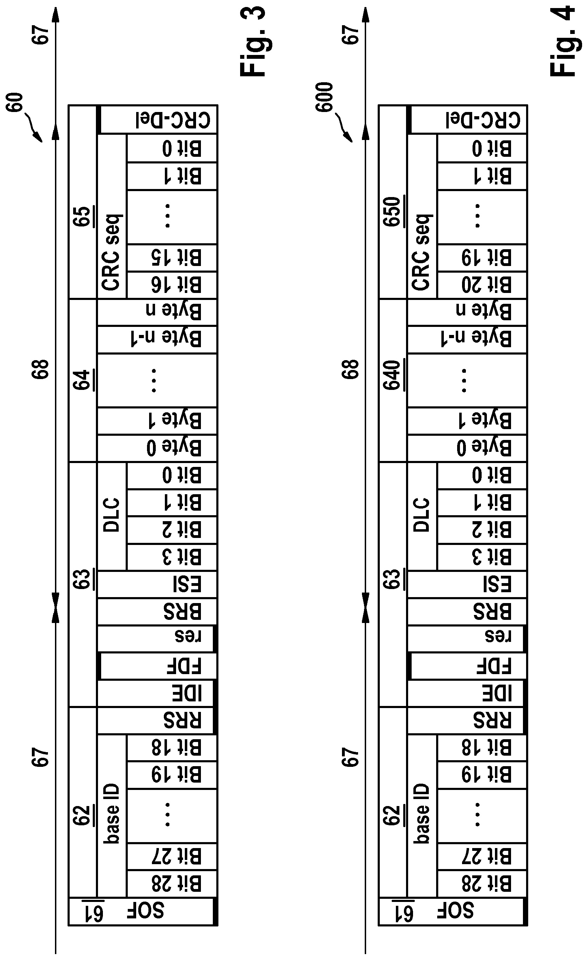

Eine weitere Möglichkeit für eine Modifikation des ersten Ausführungsbeispiels wäre, dass der Sender für den Fall, dass der Identifier 51, 51A des zu sendenden Rahmens 50 mit den kritischen Kombinationen "0000" bzw. "0001" beginnt, den Datenlängencode (Data Length Code DLC) gemäß der ISO11898-1 im Control Feld 52 um eins erhöht, und die vier Identifier Bits ID28-ID25, den Teilabschnitt 51, oder die zwei Bits F1 und F2 für die vier Identifier Bits ID28-ID25, dann in einem nicht genutzten Byte des dadurch vergrößerten Datenfeldes 53, 54, 55 ablegt. Dies hätte den Vorteil, dass die Aufteilung der Datenbytes des Datenfeldes 53, 54, 55 auf die Nutzdaten unverändert bleiben kann. Der Datenlängencode DLC im Control Feld 52 ist in Fig. 3 bis Fig. 6 für das zweite Ausführungsbeispiel dargestellt.

Noch eine weitere Alternative für eine Modifikation des ersten Ausführungsbeispiels macht sich zunutze, dass die Nutzdaten im Datenfeld 53, 54, 55 oft mit einer zusätzlichen Prüfsumme abgesichert werden, wie z.B. dem Message Authentication Code. Diese Prüfsumme wird mit den Nutzdaten zusammen im Datenfeld 53, 54, 55, beispielsweise im dritten Teil 55 für das Byte n oder an anderer Stelle im Datenfeld, übertragen. Werden nun die Identifier Bits ID28-ID25, der Teilabschnitt 51, in die Prüfsummenberechnung mit einbezogen, so kann der Empfänger, genauer gesagt seine Absicherungseinrichtung 22 oder Auswerteeinheit 22B, mittels dieser zweiten Prüfsumme die verfälschten Identifier Bits 51 erkennen.

Die Verwendung des beschriebenen Verfahrens lässt sich durch das Verhalten der Teilnehmerstationen 10, 20, 30 mit Kommunikationssteuereinrichtungen 11, 21, 31 und Absicherungseinrichtungen 12, 22, 32 nachweisen.

### Zweites Ausführungsbeispiel

Das Bussystem 1 ist bei diesem Ausführungsbeispiel in weiten Teilen auf dieselbe Weise ausgeführt, wie zuvor in Bezug auf das erste Ausführungsbeispiel beschrieben. Im Unterschied zum ersten Ausführungsbeispiel beschreibt das vorliegende Ausführungsbeispiel ein Verfahren zur Absicherung von CAN FD Rahmen mit Identifiern entsprechend Fall 1) und 2) durch zusätzliche Übertragung einer Information, z.B. Checksumme über den Inhalt der ersten vier Bits des Identifiers an anderer Stelle innerhalb des CAN FD Rahmens als bei dem ersten Ausführungsbeispiel und seinen Modifikationen genannt.

Durch die zusätzliche Übertragung einer Information, z.B. Checksumme über den Inhalt der ersten vier Bits des Identifiers wird eine Erkennung der zuvor in Bezug auf Tabelle 1 beschriebenen Fehlerfälle möglich.

Dies hat den Vorteil, dass dadurch die durch die CRC-Schwäche entstandene Lücke in der Fehlererkennung geschlossen werden kann. Die Rahmen- oder Nachrichtenformate der CAN und CAN FD Rahmen oder Nachrichten bleiben unverändert, es wird lediglich eine entsprechende Information in ein Kontrollbit geschrieben.

Fig. 3 zeigt einen von einer der Teilnehmerstationen 10, 20, 30 gesendeten Rahmen 60 mit bis zu 16 Datenbytes im CAN FD-Basisformat. Der Rahmen 60 hat ein SOF-Bit 61 sowie mehrere Rahmenfelder, wie ein Arbitrationsfeld 62 (Arbitration field), ein Control Feld 63 (Control field), ein Datenfeld 64 (Data field) und ein Prüfsummenfeld 65 (CRC field). Das Arbitrationsfeld 62 umfasst in dem base-ID-Feld einen Identifizierer (Identifier) des Rahmens 60. Am Ende des Arbitrationsfelds 62 ist ein RRS-Bit angeordnet. Das Kontrollfeld 63 beginnt mit einem IDE-Bit, das von einem FDF-Bit und dann von einem res-Bit und einem sich daran anschließenden BRS-Bit und dann ESI-Bit gefolgt wird, an das sich ein DLC-Feld anschließt. Das Datenfeld 64 ist nicht vorhanden, wenn das DLC-Feld des Kontrollfelds 63 den Wert 0 hat. Das Prüfsummenfeld 65 enthält in einem CRC-seq-Feld eine CRC-Checksumme und endet mit einem daran anschließenden CRC-Delimiter CRC-Del. Die genannten Felder und Bits sind aus der ISO-CD-11898-1 bekannt und sind daher hier nicht näher beschrieben.

In Fig. 3 ist die Länge einer Arbitrationsphase 67 bei dem vorliegenden Ausführungsbeispiel angegeben. An die Arbitrationsphase 67 schließt sich die Datenphase 68 an, falls das BRS-Bit in dem Rahmen 60 rezessiv ist. Der Rahmen 60 hat einen Kopfteil 61 bis 63, einen Datenteil 64 und einen Schlussteil 65.

In Fig. 3 bis Fig. 6 sind dominante Bits mit einer breiten Linie am unteren Rand des Rahmens 60 dargestellt. Rezessive Bits sind in Fig. 3 bis Fig. 6 mit einer breiten Linie am oberen Rand des Rahmens 60 dargestellt.

Wie in Fig. 3 gezeigt, hat die zugehörige Kommunikationssteuereinrichtung 11, 21, 31 des Senders den Rahmens 60 derart erstellt, dass das SOF-Bit, das RRS-Bit, das IDE-Bit und das res-Bit dominant sind, wohingegen das FDF-Bit und der CRC-Delimiter CRC-Del rezessiv sind.

Fig. 4 zeigt einen von einer der Teilnehmerstationen 10, 20, 30 gesendeten Rahmen 600 mit mehr als 16 Datenbytes im CAN FD-Basisformat. Der Rahmen 600 ist bis auf ein im Vergleich zu dem Datenfeld 64 längeres Datenfeld 640 und ein im Vergleich zu dem Prüfsummenfeld 65 längeres Prüfsummenfeld 650 auf die gleiche Weise aufgebaut wie der Rahmen 60 von Fig. 3. Der Rahmen 600 hat einen Kopfteil 61 bis 63, einen Datenteil 640 und einen Schlussteil 650.

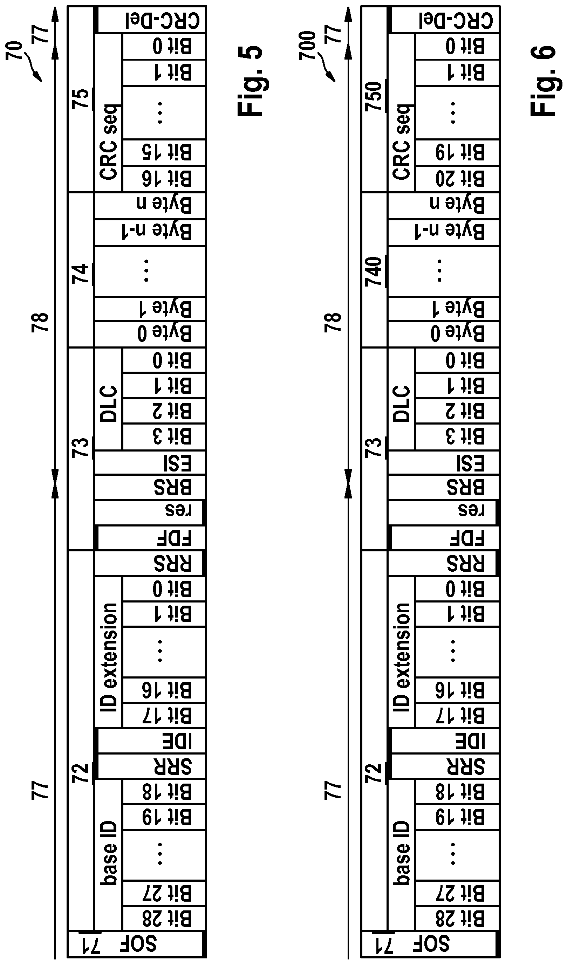

Fig. 5 zeigt einen von einer der Teilnehmerstationen 10, 20, 30 gesendeten Rahmen 70 mit bis zu 16 Datenbytes im CAN FD Erweiterten Format (CAN FD Extended Format). Gemäß Fig. 5 hat der Rahmen 70 ein SOF-Bit 71 sowie mehrere Rahmenfelder, wie ein Arbitrationsfeld 72 (Arbitration field), ein Control Feld 73 (Control field), ein Datenfeld 74 (Data field) und ein Prüfsummenfeld 75 (CRC field). Das Arbitrationsfeld 72 umfasst in dem base-ID-Feld und dem ID-ext-Feld einen Identifizierer (Identifier) des Rahmens 70. Zwischen dem base-ID-Feld und dem ID-ext-Feld sind ein SRR-Bit und ein IDE-Bit vorgesehen. Am Ende des Arbitrationsfelds 72 ist ein RRS-Bit angeordnet. Das Control Feld 73 beginnt mit einem FDF-Bit, gefolgt von einem res-Bit. Darauf folgt ein BRS-Bit und ein ESI-Bit. Das Control Feld 73 endet mit dem DLC-Feld. Das Datenfeld 74 ist nicht vorhanden, wenn das DLC-Feld des Control Felds 73 den Wert 0 hat. Ansonsten ist der Rahmen 70 auf die gleiche Weise aufgebaut wie der Rahmen 60 von Fig. 3 und hat eine entsprechende Arbitrationsphase 77 und Datenphase 78. Der Rahmen 70 hat einen Kopfteil 71 bis 73, einen Datenteil 74 und einen Schlussteil 75.

Wie in Fig. 5 gezeigt, hat die zugehörige Kommunikationssteuereinrichtung 11, 21, 31 des Senders den Rahmen 70 derart erstellt, dass das SOF-Bit, das RRS-Bit und das res-Bit dominant sind, wohingegen das SRR-Bit, das IDE-Bit und der CRC-Delimiter CRC-Del rezessiv sind

Fig. 6 zeigt einen von einer der Teilnehmerstationen 10, 20, 30 gesendeten Rahmen 700 mit mehr als 16 Datenbytes im CAN FD Erweiterten Format (CAN FD Extended Format). Der Rahmen 700 ist bis auf ein im Vergleich zu dem Datenfeld 74 längeres Datenfeld 740 und ein im Vergleich zu dem Prüfsummenfeld 75 längeres Prüfsummenfeld 750 auf die gleiche Weise aufgebaut wie der Rahmen 70 von Fig. 5. Der Rahmen 700 hat einen Kopfteil 71 bis 73, einen Datenteil 740 und einen Schlussteil 750.

Damit ein Empfänger, beispielsweise die Teilnehmerstation 20, erkennen kann, ob der Identifier 62, 72 eines empfangenen CAN FD Rahmens 60, 70, 600, 700 durch ein fehlerhaft abgetastetes Start-of-Frame Bit 61, 71 verfälscht wurde, wird vom Sender, beispielsweise der Teilnehmerstation 10, bei den betroffenen Botschaften oder Rahmen 60, 70, 600, 700 eine Information über den Inhalt der von diesem Effekt betroffenen ersten vier Bits ID28-ID25 des Identifiers 62, 72 als Teilabschnitt des Rahmens 60, 70, 600, 700 in einem Bit außerhalb des Datenfeldes 64, 74, 640, 740 abgelegt, beispielsweise im RRS-Bit des CAN FD Rahmens 60, 70, 600, 700. Diese Information ist z.B. RRS = 1 für 0001 und RRS = 0 für 0000. In allen anderen Fällen wird das RRS-Bit wie bisher vorgesehen dominant übertragen, wie in Fig. 3 bis Fig. 6 dargestellt.

Ganz allgemein kann auch hier der Teilabschnitt, dessen Information in einem Bit außerhalb des Datenfeldes 64, 74, 640, 740 abgelegt wird, mit demjenigen Bit enden, nach welchem vom Sender frühestens ein Stuff-Bit in den Rahmen 60, 70, 600, 700, eingefügt wird.

In einer Modifikation des zweiten Ausführungsbeispiels ist die Information für das RRS-Bit vorgesehen als RRS = 0, wenn die ersten vier Bits 28 bis 25 des Identifiers 62, 72, anders ausgedrückt ID28-ID25, als Teilabschnitt des Rahmens 60, 70, 600, 700 einen Wert von 0001 haben, und RRS = 1, wenn die ersten vier Bits 28-25 des Identifiers 62, 72 einen Wert von 0000 haben.

Zur Überprüfung des korrekten Empfanges der ersten vier Bits des Identifiers 62, 72 prüft oder stellt der Empfänger in einem entsprechenden Verfahren zunächst fest, ob in dem von ihm empfangenen Datenrahmen 60, 70, 600, 700 für den Identifier 62, 72 für (ID28, ID27, ID26) = 000 vorliegt, wobei (ID28, ID27, ID26) den Bits 28 bis 26 in base ID entspricht.

Ergibt diese Prüfung oder Feststellung, dass (ID28, ID27, ID26) ungleich 000 ist, wird keine weitere Prüfung vorgenommen.

Ergibt die Prüfung oder Feststellung jedoch, dass (ID28, ID27, ID26) gleich 000 ist, vergleicht der Empfänger den Inhalt von Bit 25 des Identifiers 62, 72, also ID25, mit dem Inhalt des RRS-Bits im von dem Empfänger empfangenen Datenrahmen 60, 70, 600, 700.

Bei Ungleichheit wird der empfangene Rahmen 60, 70, 600, 700 verworfen bzw. für gültig bewertet, d.h. der Empfänger sendet einen Error Flag.

Bei Übereinstimmung wird der Rahmen 60, 70, 600, 700 nicht verworfen bzw. für gültig bewertet.

Bei der oben genannten Modifikation des zweiten Ausführungsbeispiels sind die beiden zuvor genannten Maßnahmen, die für Ungleichheit und Übereinstimmung vorgesehen sind, entsprechend umgekehrt. Das heißt, bei Übereinstimmung wird der empfangene Rahmen 60, 70, 600, 700 verworfen, d.h. der Empfänger sendet einen Error Flag. Und bei Ungleichheit wird der Rahmen 60, 70, 600, 700 nicht verworfen.

In einer weiteren Modifikation des zweiten Ausführungsbeispiels wird zusätzlich das noch übrige bzw. nicht belegte "res" Bit und/oder das "ESI"-Bit mit herangezogen und F1 und F2 verwendet. Diese Bits sind zuvor in Bezug auf das erste Ausführungsbeispiel und dessen Modifikationen genauer beschrieben.

Es ist jedoch auch möglich, nach dem ESI-Bit noch ein oder mehr zusätzliche Bits für die Übertragung der Information, z.B. F1 und F2, einzufügen.

Das RRS Bit wird in CAN FD Rahmen 60, 70, 600, 700 an derselben Position übertragen, an denen in Classic CAN Rahmen das RTR Bit übertragen wird.

Die Arbeitsversion des ISO-Standards zu CAN FD (ISO 11898-1) sieht vor, dass RRS-Bits nur in CAN FD Rahmen 60, 70, 600, 700 vorgesehen sind, wobei das RRS-Bit in CAN FD Rahmen 60, 70, 600, 700 an der Position des RTR-Bits in Classic CAN Rahmen gesendet werden soll und das RRS-Bit dominant gesendet werden soll, jedoch Empfänger rezessive und dominante RRS-Bits akzeptieren sollen. ("RRS bit [only in FD Frames] The RRS bit shall be transmitted in FD Frames at the position of the RTR bit in Classical Frames. The RRS bit shall be transmitted dominant, but receivers shall accept recessive and dominant RRS bits.")

Da zum Zeitpunkt der Übertragung des RRS-Bits für den Empfänger noch nicht feststeht, ob es sich bei dem empfangenen Rahmen 60, 70, 600, 700 bzw., des empfangenen Rahmens um einen Classic CAN oder um einen CAN FD Rahmen 60, 70, 600, 700 bzw. Nachricht handelt, kann die Auswertung erst nach Übertragung von zwei weiteren Bits (IDE Bit und FDF Bit) für Basic Format (Rahmen 60, 600), bzw. eines weiteren Bits (FDF Bit) für Extended Format (Rahmen 70, 700) durchgeführt werden.

Das RTR- bzw. RRS-Bit wird bei der Arbitrierung um den Buszugriff mitberücksichtigt. Dies führt jedoch nicht zu Problemen, weil: Wenn gleichzeitig von zwei verschiedenen Teilnehmern die Übertragung zweier Rahmen gestartet wird, wobei ein Rahmen, beispielsweise ein Rahmen 60, mit 0000 beginnt und RRS = 0 aufweist, und wobei der andere Rahmen, beispielsweise ein Rahmen 700, mit 0001 beginnt und RRS = 1 aufweist, wird (korrekte Funktion der Sender vorausgesetzt) der erste Sender die Arbitrierung gewinnen und der Wert des RRS-Bits spielt keine Rolle für die Arbitrierung.

Die Verwendung des beschriebenen Verfahrens lässt sich durch das Verhalten der Teilnehmerstationen 10, 20, 30 mit Kommunikationssteuereinrichtungen 11, 21, 31 und Absicherungseinrichtungen 12, 22, 32 nachweisen.

Alle zuvor beschriebenen Ausgestaltungen des Bussystems 1, der Teilnehmerstationen 10, 20, 30 und des Verfahrens können einzeln oder in allen möglichen Kombinationen Verwendung finden. Insbesondere können alle Merkmale der zuvor beschriebenen Ausführungsbeispiele und/oder deren Modifikationen beliebig kombiniert oder weggelassen werden. Zusätzlich sind insbesondere folgende Modifikationen denkbar.

Das zuvor beschriebene Bussystem 1 gemäß den Ausführungsbeispielen ist anhand eines auf dem CAN FD Protokoll basierenden Bussystems beschrieben. Das Bussystem 1 gemäß den Ausführungsbeispielen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10 bis 30 in dem Bussystem 1 der Ausführungsbeispiele und deren Modifikationen ist beliebig. Insbesondere können auch nur Teilnehmerstationen 10 oder 20 oder 30 in dem Bussystem 1 vorhanden sein. Es sind beliebige Kombinationen der Teilnehmerstationen 10 bis 30 in den Bussystemen 1 möglich.

Der Teilabschnitt 51, 62, 72 des Rahmens 50, 60, 70, 600, 700 muss nicht unbedingt die vier ersten Bits des Identifiers eines CAN FD Rahmens aufweisen. Der Teilabschnitt kann auch eine andere vorbestimmte Abfolge von Bitwerten enthalten. Die vorbestimmte Abfolge kann mindestens zwei Bits aufweisen.

## Patentansprüche

1. Verfahren zur seriellen Übertragung eines Rahmens (50; 60; 70; 600; 700) über eine Busleitung (3) von einem Sender zu mindestens einem Empfänger,
wobei vom Sender in den Rahmen (50; 60; 70; 600; 700) gemäß einer vorbestimmten Regel Stuff-Bits zur Erzeugung zusätzlicher Signalflanken eingefügt werden und/oder
wobei vom Empfänger die Stuff-Bits bei einer Auswertung des Rahmens (50; 60; 70; 600; 700) wieder entfernt werden, wobei das Verfahren **dadurch gekennzeichnet ist, dass** wenigstens eine Information über einen Teilabschnitt (51; 62; 72) des Rahmens (50; 60; 70; 600; 700) zusätzlich außerhalb dieses Teilabschnitts (51; 62; 72) eingefügt und übertragen wird, dass der Teilabschnitt (51; 62; 72) mit demjenigen Bit endet, nach welchem vom Sender frühestens ein Stuff-Bit in den Rahmen (50; 60; 70; 600; 700) eingefügt wird,
und dass der Teilabschnitt (51; 62; 72) eine vorbestimmte Abfolge von Bitwerten aufweist.

2. Verfahren nach Anspruch 1, wobei der Rahmen (50; 60; 70; 600; 700) einen Kopfteil (51, 51A, 52; 61 bis 63; 71 bis 73), einen Datenteil (53, 54, 55; 64; 74; 640; 740) und einen Schlussteil (56; 65; 75; 650; 750) aufweist, und/oder wobei der Kopfteil (51, 51A, 52; 61 bis 63; 71 bis 73) einen Identifier (51, 51A; 62; 72) aufweist, und/oder wobei der Rahmen (50; 60; 70; 600; 700) eine CRC-Checksumme aufweist, und/oder wobei der Teilabschnitt (51; 62; 72) kein Stuff-Bit aufweist.

3. Verfahren nach Anspruch 1 oder 2, wobei die Information im Datenteil (53, 54, 55; 64; 74; 640; 740) und/oder im Kopfteil (51, 51A, 52; 61 bis 63; 71 bis 73) des Rahmens (50; 60; 70; 600; 700) übertragen wird.

4. Verfahren nach einem der vorangehenden Ansprüche, wobei die Information zumindest teilweise im RRS-Bit und/oder im res-Bit und/oder im "ESI"-Bit eines CAN FD Rahmens (50; 60; 70; 600; 700) und/oder einer zusätzlichen Prüfsumme im Datenteil (53, 54, 55; 64; 74; 640; 740) übertragen wird.

5. Verfahren nach einem der vorangehenden Ansprüche,
wobei der Empfänger bei der Auswertung des Rahmens (50; 60; 70; 600; 700) die außerhalb des Teilabschnitts (51; 62; 72) abgelegte Information über den Teilabschnitt (51; 62; 72) des Rahmens (50; 60; 70; 600; 700) mit dem Teilabschnitt (51; 62; 72) des Rahmens (50; 60; 70; 600; 700) vergleicht und abhängig von dem Vergleichsergebnis den Rahmen (50; 60; 70; 600; 700) für gültig oder ungültig bewertet.

6. Verfahren nach einem der vorangehenden Ansprüche,
wobei der Teilabschnitt (51; 62; 72) des Rahmens (50; 60; 70; 600; 700) vier Bits umfasst, deren Informationen in zwei Bits außerhalb dieses Teilabschnitts (51; 62; 72) übertragen wird.

7. Verfahren nach einem der vorangehenden Ansprüche,
wobei der Teilabschnitt (51; 62; 72) des Rahmens (50; 60; 70; 600; 700) bis zu drei Bits umfasst, deren Information in einem Bit außerhalb dieses Teilabschnitts (51; 62; 72) übertragen wird, und/oder
wobei der Teilabschnitt (51; 62; 72) des Rahmens (50; 60; 70; 600; 700) bis zu drei Bits mit gleichem Pegel umfasst, denen außerhalb des Teilabschnitts (51; 62; 72) ein weiteres Bit mit gleichem Pegel unmittelbar vorangeht.

8. Verfahren nach einem der vorangehenden Ansprüche,
wobei der Teilabschnitt (51; 62; 72) des Rahmens (50; 60; 70; 600; 700) die vier ersten Bits des Identifiers eines CAN FD Rahmens sind.

9. Teilnehmerstation (10; 20; 30) für ein Bussystem (1), mit
einer Sende-/Empfangseinrichtung (13; 23; 33) zum Senden eines Rahmens (50; 60; 70; 600; 700) an und/oder Empfangen eines Rahmens (50; 60; 70; 600; 700) von eine/r weitere/n Teilnehmerstation des Bussystems (1), mit welchem Rahmen (50; 60; 70; 600; 700) mittels serieller Übertragung über eine Busleitung (3) von einem Sender zu mindestens einem Empfänger übertragbar sind, und
einer Absicherungseinrichtung (12; 22; 32) zum Absichern einer Information über einen Teilabschnitt (51; 62; 72) des Rahmens (50; 60; 70; 600; 700), wobei die Sende-/Empfangseinrichtung (13; 23; 33) ausgestaltet ist, vor dem Senden eines Rahmens (50; 60; 70; 600; 700) in den Rahmen (50; 60; 70; 600; 700) gemäß einer vorbestimmten Regel Stuff-Bits zur Erzeugung zusätzlicher Signalflanken einzufügen und/oder beim Auswerten eines empfangenen Rahmens (50; 60; 70; 600; 700) die Stuff-Bits wieder zu entfernen, wobei die Teilnehmerstation **dadurch gekennzeichnet ist, dass** die Absicherungseinrichtung (12; 22; 32) ausgestaltet ist, wenigstens eine Information über einen Teilabschnitt (51; 62; 72) des Rahmens (50; 60; 70; 600; 700) zusätzlich außerhalb dieses Teilabschnittes (51; 62; 72) in den Rahmen (50; 60; 70; 600; 700) einzufügen, dass der Teilabschnitt (51; 62; 72) mit demjenigen Bit endet, nach welchem vom Sender frühestens ein Stuff-Bit in den Rahmen (50; 60; 70; 600; 700) eingefügt wird, und dass der Teilabschnitt (51; 62; 72) eine vorbestimmte Abfolge von Bitwerten aufweist.

10. Bussystem (1), mit
einer Busleitung (3), und
mindestens zwei Teilnehmerstationen (10, 20, 30), welche über die Busleitung (3) derart miteinander verbindbar sind, dass sie miteinander kommunizieren können,
wobei mindestens eine der mindestens zwei Teilnehmerstationen (10, 20, 30) eine Teilnehmerstation (10; 20; 30) nach Anspruch 9 ist

## Claims

1. Method for the serial transmission of a frame (50; 60; 70; 600; 700) from a transmitter to at least one receiver via a bus line (3),
stuff bits being inserted into the frame (50; 60; 70; 600; 700) by the transmitter according to a predetermined rule to generate additional signal edges and/or
the stuff bits being removed again by the receiver in an evaluation of the frame (50; 60; 70; 600; 700),
the method being **characterized in that**
at least one item of information concerning a segment (51; 62; 72) of the frame (50; 60; 70; 600; 700) is additionally inserted and transmitted outside this segment (51; 62; 72), and **in that** the segment (51; 62; 72) has a predetermined sequence of bit values.

2. Method according to Claim 1,
the frame (50; 60; 70; 600; 700) having a header part (51, 51A, 52; 61 to 63; 71 to 73), a data part (53, 54, 55; 64; 74; 640; 740) and an end part (56; 65; 75; 650; 750) and/or
the header part (51, 51A, 52; 61 to 63; 71 to 73) having an identifier (51, 51A; 62; 72), and/or
the frame (50; 60; 70; 600; 700) having a CRC checksum, and/or
the segment (51; 62; 72) having no stuff bit.

3. Method according to Claim 2,
the information being transmitted in the data part (53, 54, 55; 64; 74; 640; 740) and/or in the header part (51, 51A, 52; 61 to 63; 71 to 73) of the frame (50; 60; 70; 600; 700).

4. Method according to one of the preceding claims, the information being transmitted at least partially in the RRS bit and/or in the res bit and/or in the "ESI" bit of a CAN FD frame (50; 60; 70; 600; 700) and/or an additional checksum in the data part (53, 54, 55; 64; 74; 640; 740).

5. Method according to one of the preceding claims, in the evaluation of the frame (50; 60; 70; 600; 700), the receiver comparing the information concerning the segment (51; 62; 72) of the frame (50; 60; 70; 600; 700) stored outside the segment (51; 62; 72) with the segment (51; 62; 72) of the frame (50; 60; 70; 600; 700) and, depending on the result of the comparison, assessing the frame (50; 60; 70; 600; 700) as valid or invalid.

6. Method according to one of the preceding claims,
the segment (51; 62; 72) of the frame (50; 60; 70; 600; 700) comprising four bits, of which the information is transmitted in two bits outside this segment (51; 62; 72).

7. Method according to one of the preceding claims, the segment (51; 62; 72) of the frame (50; 60; 70; 600; 700) comprising up to three bits, of which the information is transmitted in a bit outside this segment (51; 62; 72), and/or the segment (51; 62; 72) of the frame (50; 60; 70; 600; 700) comprising up to three bits with the same level, which are directly preceded by a further bit with the same level outside the segment (51; 62; 72).

8. Method according to one of the preceding claims, the segment (51; 62; 72) of the frame (50; 60; 70; 600; 700) being the four first bits of the identifier of a CAN FD frame.

9. Subscriber station (10; 20; 30) for a bus system (1), with
a transmitting/receiving device (13; 23; 33) for transmitting a frame (50; 60; 70; 600; 700) to and/or receiving a frame (50; 60; 70; 600; 700) from a further subscriber station of the bus system (1), with which frames (50; 60; 70; 600; 700) can be transmitted from a transmitter to at least one receiver by means of serial transmission via a bus line (3), and
a verifying device (12; 22; 32) for verifying an item of information concerning a segment (51; 62; 72) of the frame (50; 60; 70; 600; 700),
the transmitting/receiving device (13; 23; 33) being designed so as, before sending a frame (50; 60; 70; 600; 700), to insert stuff bits into the frame (50; 60; 70; 600; 700) according to a predetermined rule to generate additional signal edges and/or so as, when evaluating a received frame (50; 60; 70; 600; 700), to remove the stuff bits again,
the subscriber being **characterized in that**
the verifying device (12; 22; 32) being designed so as to additionally insert at least one item of information concerning a segment (51; 62; 72) of the frame (50; 60; 70; 600; 700) into the frame (50; 60; 70; 600; 700) outside this segment (51; 62; 72),
**in that** the segment (51; 62; 72) ending with that bit after which at the earliest a stuff bit is inserted into the frame (50; 60; 70; 600; 700) by the transmitter, and **in that**
the segment (51; 62; 72) having a predetermined sequence of bit values.

10. Bus system (1), with
a bus line (3), and
at least two subscriber stations (10, 20, 30), which can be connected to one another via the bus line (3) in such a way that they can communicate with one another,
at least one of the at least two subscriber stations (10, 20, 30) being a subscriber station (10; 20; 30) according to Claim 9.

## Revendications

1. Procédé de transmission série d'une trame (50 ; 60 ; 70 ; 600 ; 700) sur une ligne de bus (3) d'un émetteur à au moins un récepteur,
dans lequel des bits de remplissage sont introduits par l'émetteur dans les trames (50 ; 60 ; 70 ; 600 ; 700) selon une règle prédéterminée pour générer des fronts de signaux supplémentaires, et/ou
dans lequel les bits de remplissage sont retirés par le récepteur lors d'une évaluation de la trame (50; 60 ; 70 ; 600 ; 700),
dans lequel le procédé est **caractérisé en ce qu'**au moins une information concernant une section partielle (51 ; 62 ; 72) de la trame (50 ; 60 ; 70 ; 600 ; 700) est en outre introduite à l'extérieur de ladite section partielle (51 ; 62 ; 72) et est transmise, **en ce que** la section partielle (51 ; 62 ; 72) se termine par le bit après lequel un bit de remplissage est introduit le plus tôt par l'émetteur dans la trame (50 ; 60 ; 70 ; 600 ; 700),
et **en ce que** la section partielle (51 ; 62 ; 72) présente une séquence prédéterminée de valeurs binaires.

2. Procédé selon la revendication 1,
dans lequel la trame (50 ; 60 ; 70 ; 600 ; 700) présente une partie de tête (51, 51A, 52 ; 61 à 63 ; 71 à 73), une partie de données (53, 54, 55 ; 64 ; 74 ; 640 ; 740) et une partie finale (56 ; 65 ; 75 ; 650 ; 750), et/ou
dans lequel la partie de tête (51, 51A, 52 ; 61 à 63 ; 71 à 73) comporte un identifiant (51, 51A ; 62 ; 72), et/ou
dans lequel la trame (50 ; 60 ; 70 ; 600 ; 700) comporte une somme de contrôle CRC, et/ou dans lequel la section partielle (51 ; 62 ; 72) ne comporte aucun bit de remplissage.

3. Procédé selon la revendication 1 ou 2,
dans lequel l'information contenue dans la partie de données (53, 54, 55 ; 64 ; 74 ; 640 ; 740) et/ou dans la partie de tête (51, 51A, 52 ; 61 à 63 ; 71 à 73) de la trame (50 ; 60 ; 70 ; 600 ; 700) est transmise.

4. Procédé selon l'une quelconque des revendications précédentes,
dans lequel l'information est transmise au moins partiellement dans le bit RRS et/ou dans le bit res et/ou dans le bit "ESI" d'une trame CAN FD (50 ; 60 ; 70 ; 600 ; 700) et/ou d'une somme de contrôle supplémentaire contenue dans la partie de données (53, 54, 55 ; 64 ; 74 ; 640 ; 740).

5. Procédé selon l'une quelconque des revendications précédentes,
dans lequel, lors de l'évaluation de la trame (50 ; 60 ; 70 ; 600 ; 700), le récepteur compare l'information stockée à l'extérieur de la section partielle (51 ; 62 ; 72) et concernant la section partielle (51 ; 62 ; 72) de la trame (50 ; 60 ; 70 ; 600 ; 700) à la section partielle (51 ; 62 ; 72) de la trame (50 ; 60 ; 70 ; 600 ; 700) et évalue la trame (50 ; 60 ; 70 ; 600 ; 700) comme étant valide ou invalide en fonction du résultat de la comparaison.

6. Procédé selon l'une quelconque des revendications précédentes,
dans lequel la section partielle (51 ; 62 ; 72) de la trame (50 ; 60 ; 70 ; 600 ; 700) comprend quatre bits dont les informations sont transmises dans deux bits situés à l'extérieur de ladite section partielle (51 ; 62 ; 72) .

7. Procédé selon l'une quelconque des revendications précédentes,
dans lequel la section partielle (51 ; 62 ; 72) de la trame (50 ; 60 ; 70 ; 600 ; 700) comprend jusqu'à trois bits dont l'information est transmise dans un bit situé à l'extérieur de ladite section partielle (51 ; 62 ; 72), et/ou
dans lequel la section partielle (51 ; 62 ; 72) de la trame (50 ; 60 ; 70 ; 600 ; 700) comprend jusqu'à trois bits présentant le même niveau, qu'un autre bit de même niveau précède immédiatement à l'extérieur de la section partielle (51 ; 62 ; 72).

8. Procédé selon l'une quelconque des revendications précédentes,
dans lequel la section partielle (51 ; 62 ; 72) de la trame (50 ; 60 ; 70 ; 600 ; 700) est constituée des quatre premiers bits de l'identifiant d'une trame CAN FD.

9. Station participante (10 ; 20 ; 30) destinée à un système de bus (1), comportant
un dispositif d'émission/réception (13 ; 23 ; 33) destiné à émettre une trame (50 ; 60 ; 70 ; 600 ; 700), et/ou à recevoir une trame (50 ; 60 ; 70 ; 600 ; 700) à l'intention/en provenance d'une autre station participante du système de bus (1), au moyen duquel des trames (50 ; 60 ; 70 ; 600 ; 700) peuvent être transmises par transmission série sur une ligne de bus (3) d'un émetteur à au moins un récepteur, et
un dispositif de sécurité (12 ; 22 ; 32) destiné à sécuriser une information concernant une section partielle (51 ; 62 ; 72) de la trame (50 ; 60 ; 70 ; 600 ; 700),
dans lequel le dispositif d'émission/réception (13 ; 23 ; 33) est conçu de manière à ce que, avant l'émission d'une trame (50 ; 60 ; 70 ; 600 ; 700), des bits de remplissage soient introduits selon une règle prédéterminée dans la trame (50 ; 60 ; 70 ; 600 ; 700) afin de générer des fronts de signal supplémentaires et/ou pour retirer les bits de remplissage lors de l'évaluation d'une trame (50 ; 60 ; 70 ; 600 ; 700) reçue,
dans lequel la station participante est **caractérisée en ce que**
le dispositif de sécurité (12 ; 22 ; 32) est conçu de manière à ce qu'au moins une information concernant une section partielle (51 ; 62 ; 72) de la trame (50 ; 60 ; 70 ; 600 ; 700) soit en outre introduite dans la trame (50 ; 60 ; 70 ; 600 ; 700), à l'extérieur de ladite section partielle (51 ; 62 ; 72),
**en ce que** la section partielle (51 ; 62 ; 72) se termine par le bit après lequel un bit de remplissage a été introduit le plus tôt par l'émetteur dans la trame (50 ; 60 ; 70 ; 600 ; 700), et
**en ce que** la section partielle (51 ; 62 ; 72) comporte une séquence prédéterminée de valeurs binaires.

10. Système de bus (1), comportant
une ligne de bus (3), et
au moins deux stations participantes (10, 20, 30) qui peuvent être reliées entre elles par l'intermédiaire de la ligne de bus (3) de manière à ce qu'elles puissent communiquer entre elles,
dans lequel au moins l'une desdites au moins deux stations participantes (10, 20, 30) est une station participante (10 ; 20 ; 30) selon la revendication 9.
